# FASCICULE DE BREVET EUROPEEN

(11) **EP 3 986 678 B1**
(45) Date de publication et mention de la délivrance du brevet: **19.02.2025**
(21) Numéro de dépôt: 20742343.5
(22) Date de dépôt: 16.06.2020
(51) Int. Cl.: B25J 9/16

(54) **PROCEDE D'EBAVURAGE AMELIORE DE PIECE AERONAUTIQUE**
VERFAHREN ZUM VERBESSERTEN ENTGRATEN EINES LUFTFAHRTTEILS
METHOD FOR IMPROVED DEBURRING OF AN AERONAUTICAL PART

(30) Priorité: 19.06.2019 FR 1906604
(43) Date de publication de la demande: 27.04.2022
(73) Titulaire: SAFRAN AIRCRAFT ENGINES, 75015 Paris (FR)
(72) Inventeur: RANCIC, Mickael, 77550 Moissy-Cramayel (FR); SALMON, Jérôme, 77550 Moissy-Cramayel (FR); NAVAR, Pierre, Marcel, Emilien, 77550 Moissy-Cramayel (FR)
(74) Mandataire: Cabinet Beau de Loménie
(86) Numéro de dépôt international: PCT/FR2020/051029
(87) Numéro de publication internationale: WO 2020/254753

(56) Documents cités:
- EP-B1- 2 219 827
- FR-A1- 2 875 165
- US-A- 4 590 578
- US-A1- 2003 037 588
- DIAZ POSADA JULIAN RICARDO ET AL: "Automatic Programming and Control for Robotic Deburring", 21 June 2016 (2016-06-21), XP093146317, Retrieved from the Internet <URL:https://ieeexplore.ieee.org/stampPDF/getPDF.jsp?tp=&arnumber=7559187&ref=aHR0cHM6Ly9pZWVleHBsb3JlLmllZWUub3JnL2Fic3RyYWN0L2RvY3VtZW50Lzc1NTkxODc/Y2FzYV90b2tlbj1ROEpTZE1UMHVpd0FBQUFBOk9zVWVpNF9QcjhMTUtWRWY1RFVveEtfOUtRZ0tCSllFLTJnTE9iaXZZX1lyd3BGeWtXbS02ZjZyeXQtaEFlRy01M2Y5QUc3TDh3> [retrieved on 20240327]
- DAVID MAILHOT: "AMÉLIORATION DE LA PRÉCISION D'UN BRAS ROBOTISÉ POUR UNE APPLICATION D'ÉBAVURAGE", 5 May 2010 (2010-05-05), XP055674554, Retrieved from the Internet <URL:http://espace.etsmtl.ca/993/1/MAILHOT_David.pdf> [retrieved on 20200306]
- DAVID LAFORTUNE: "ROBOTISATION DE L'ÉBAVURAGE DE PRÉCISION : DÉVELOPPEMENT DE PROCÉDÉS GÉNÉRIQUES PAR GÉOMÉTRIE", 16 August 2011 (2011-08-16), XP055674541, Retrieved from the Internet <URL:http://espace.etsmtl.ca/901/1/LAFORTUNE_David.pdf> [retrieved on 20200306]

## Description

### Domaine Technique

L'invention concerne le domaine des turbomachines. Plus précisément, l'invention concerne l'usinage des alvéoles de pièces d'aéronef, et notamment un procédé d'ébavurage des arêtes de ces alvéoles.

### Technique antérieure

De nombreuses pièces aéronautiques comportent des arêtes, par exemple un disque de compresseur, de turbine ou de soufflante de turbomachine qui comprend une pluralité de rainures (alvéoles) réparties sur sa circonférence externe et recevant des pieds d'aubes. Le fond de chaque rainure forme ainsi, avec les faces amont et aval du disque, une pluralité d'arêtes.

Ces arêtes comportent en général des bavures qui sont la conséquence de la réalisation de formes particulières (rainures, orifices, découpes, ...) dans la pièce. L'élimination de ces bavures peut être réalisée par exemple par cassage d'angle mécanique.

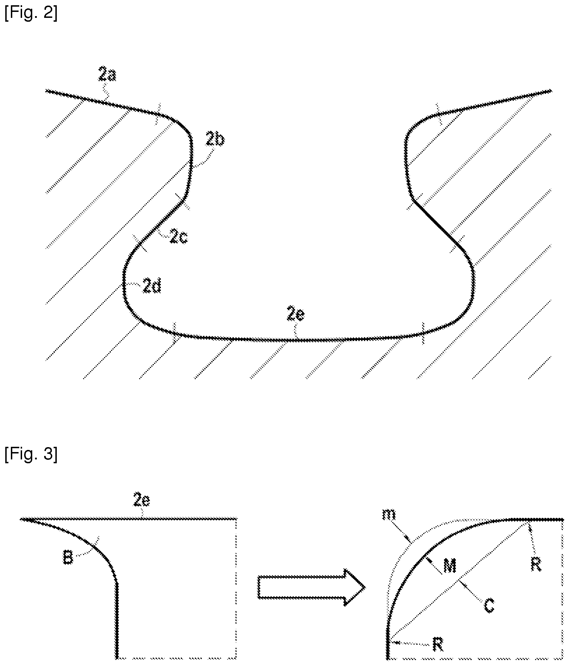

Le cassage d'angle peut être défini comme étant une forme rayonnante convexe comprise entre un rayon minimal m et un chanfrein rayonné C, comme illustré sur la figure 3. Cette forme rayonnante est une zone de raccordement de section circulaire entre les deux surfaces qui est tangente à ses extrémités aux deux surfaces de la pièce.

Il existe généralement trois grandes opérations successives pour réaliser un cassage d'angle :
- L'ébavurage qui consiste en l'enlèvement de la bavure B,
- L'ébauche qui consiste en l'obtention d'un chanfrein C ou d'un rayon inférieur au rayon minimal m (pré-rayonnage). Cette opération est souvent couplée avec celle d'ébavurage,
- La finition qui consiste en l'obtention de rayons R de part et d'autre du chanfrein C (opération de mouchage) ou d'un rayon M supérieur au rayon minimal m.

Une définition précise des cassages d'angle est obligatoire pour des raisons de dimensionnement et d'intégrité de matière. En effet, les procédés de cassage d'angle utilisés sont susceptibles de générer des incidents sur les pièces tournantes. Plus particulièrement, l'oubli des réalisations de ces cassages d'angle ou l'élimination incomplète des bavures sont quelque unes des principales causes des incidents liés aux opérations de cassage d'angle. Ces oublis ou ces éliminations incomplètes des bavures peuvent être causés par des opérations d'ajustage manuel. Aussi, les opérations d'ajustage manuel sur les arêtes jugées critiques comme celles des alvéoles des disques de soufflante par exemple, des tambours et des disques de turbines, sont couramment remplacées par des méthodes automatisées de cassage d'angles.

Une de ces méthodes utilise des techniques de brossage pour les opérations d'ébavurage, de pré-rayonnage et de finition, à l'aide de brosses circulaires à lamelles. Néanmoins, ces techniques génèrent des rayons asymétriques tout au long de l'arête de l'alvéole, en fonction de l'angle d'inclinaison de la brosse. Plus précisément, les valeurs maximales de rayon sont obtenues pour un brossage perpendiculaire à l'arête, c'est-à-dire en disposant l'axe de rotation de la brosse circulaire parallèlement à l'arête. Or, compte tenu de la structure de la pièce aéronautique, par exemple un disque de turbine, un brossage perpendiculaire à l'arête en fond d'alvéole engendrerait une interaction entre la brosse et la pièce (au niveau de la virole par exemple), une telle interaction étant interdite. Des angles de brossage différents doivent donc être utilisés pour le brossage de l'arête en fond d'alvéoles, engendrant des formes asymétriques des rayons tout au long de l'arête de l'alvéole. De plus, dans certains cas, le rayonnage des arêtes au fond des alvéoles ne permet pas d'atteindre la valeur souhaitée du rayon. EP 2 219 827 B1 décrit un autre exemple d'un système permettant d'enlever de la matière de composants.

Afin de résoudre cette problématique, une préparation d'arête uniquement en fond d'alvéole est nécessaire. Les moyens connus à l'heure actuelle (ajustage manuel, fraisage sur machine outil) ne sont pas entièrement satisfaisants d'un point de vue économique, et compte tenu des gammes utilisées actuellement. Il existe donc un besoin pour une solution d'ébavurage économiquement plus favorable de pièces aéronautiques, tout en apportant la précision nécessaire à l'ébavurage de certaines portions critiques telles que les alvéoles de disques de turbomachine.

### Exposé de l'invention

Le présent exposé concerne un procédé tel que défini dans la revendication 1.

Le fait de disposer l'outil de calibration et l'outil d'usinage sur le même porte outil, de manière immobile l'un par rapport à l'autre, permet d'améliorer la précision de l'usinage, ici de l'ébavurage, en du cas de figure actuellement présent sur machine-outil dans lequel le passage de l'étape d'étalonnage à l'étape d'ébavurage se ferait en remplaçant l'outil de calibration par l'outil d'usinage, sur le porte outil.

Ainsi, le fait de monter l'outil de calibration et l'outil d'usinage sur le même porte outil et de façon fixe, et de réaliser l'étalonnage de l'outil de calibration et de l'outil d'usinage successivement, permet de définir de façon exacte, et pour toute la durée du procédé d'ébavurage, la distance relative entre ces deux éléments dans l'espace quelle que soit la position de l'outillage articulé dans ce même espace. Plus précisément, cette étape permet de déterminer le positionnement relatif entre l'outil de calibration et l'outil d'usinage, et non un positionnement absolu dans l'espace. En effet, selon l'art antérieur, un étalonnage de l'outil de calibration n'est généralement pas effectué, et le positionnement de l'outil d'usinage est par conséquent obtenu, par l'intermédiaire de l'outil de calibration, de manière absolue. Or, le fait d'effectuer un étalonnage de manière couplée sur l'outil de calibration et sur l'outil d'usinage, en particulier en utilisant le même moyen d'étalonnage, permet d'obtenir ce positionnement relatif entre ces eux outils. Cette configuration permet de s'affranchir des erreurs de positionnement ou de trajectoire de l'outillage articulé qui pourrait être engendré par le fait de changer l'outil de calibration par l'outil d'usinage, ou l'inverse, et par le fait que l'outil d'usinage est généralement disposé à une extrémité de l'outillage articulé comprenant une pluralité d'axes de rotation, constituant une source d'erreur supplémentaire. Dans le cas présent, l'outil de calibration et l'outil d'usinage étant disposés immobiles l'un par rapport à l'autre sur le même porte outil, et la position relative de l'un par rapport à l'autre étant déterminée lors de l'étape d'étalonnage, la précision de positionnement ou de trajectoire est ainsi améliorée.

En outre, l'étape de paramétrage peut comprendre la détermination, par l'intermédiaire de l'outil de calibration, de la position et de l'inclinaison d'un plan principal de la pièce aéronautique par rapport à l'outillage articulé, de la position d'un centre de la pièce aéronautique, et de la position angulaire de la pièce autour de son axe central.

Par « plan principal », on comprend un plan selon lequel la pièce aéronautique s'étend principalement. Lorsque la pièce aéronautique est un disque, par exemple, le plan principal de la pièce aéronautique est le plan dans lequel le diamètre du disque s'étend, le centre de la pièce aéronautique est le centre du disque, et l'axe central de la pièce est l'axe central du disque. Par « position angulaire », on comprend la position d'une arête à ébavurer autour de l'axe central de la pièce aéronautique, en d'autres termes, la position de la pièce aéronautique autour de son axe central.

Ces paramètres permettent ainsi de connaître, par l'intermédiaire de l'outil de calibration, solidaire de l'outillage articulé, la position précise de la pièce aéronautique par rapport à l'outillage articulé, en d'autres termes, dans le référentiel de ce dernier, et non pas sa position absolue dans l'espace. Cela permet d'améliorer la précision de l'usinage réalisée par l'outil d'usinage, lui-même solidaire de l'outillage articulé, et dont la position exacte par rapport à l'outil de calibration est connue, en comparaison d'un cas de figure dans lequel la position de la pièce aéronautique serait déterminée de manière absolue. En particulier, la position précise d'au moins une arête à ébavurer par rapport à l'outillage articulé, notamment la position angulaire de cette arête, permet d'améliorer la précision de l'usinage par l'outil d'usinage.

Ce procédé permet ainsi de limiter le risque d'oubli de la réalisation de cassages d'angle de certaines arêtes, ou d'élimination incomplète des bavures. Il permet également d'améliorer la précision des opérations de cassage d'angle des arêtes de pièces aéronautiques.

Dans certains modes de réalisation, la pièce aéronautique comprend une pluralité d'arêtes à ébavurer uniformément réparties autour d'un axe central de la pièce aéronautique.

Dans certains modes de réalisation, la trajectoire prédéterminée est un arc de cercle.

Dans certains modes de réalisation, l'étape d'étalonnage est réalisée par l'intermédiaire de contacts successifs entre au moins une bille d'étalonnage et l'outil de calibration et d'usinage.

La bille d'étalonnage peut être une bille fixée de manière immobile à un support, et dont les dimensions sont connues. L'étape d'étalonnage peut être réalisée par une méthode itérative, par des contacts successifs entre l'outil de calibration, par exemple, et la bille d'étalonnage en des points prédéfinis, jusqu'à converger vers une valeur stable de la position de l'outil de calibration par rapport au porte outil.

Dans certains modes de réalisation, la au moins une bille d'étalonnage est une première bille d'étalonnage fixée à un support et immobile par rapport à ce support, l'étape d'étalonnage étant réalisée par l'intermédiaire de contacts successifs entre la première bille d'étalonnage et l'outil de calibration et d'usinage, puis par l'intermédiaire de contacts successifs entre une deuxième bille d'étalonnage et l'outil de calibration et d'usinage, la deuxième bille d'étalonnage étant fixée au support de manière mobile par rapport à ce support.

La méthode itérative réalisée sur la première bille d'étalonnage est également réalisée sur la deuxième bille d'étalonnage mobile. Par « fixée au support de manière mobile », on comprend que le contact entre l'outil de calibration et la deuxième bille entraîne un déplacement de cette dernière. Par exemple, la deuxième bille d'étalonnage peut être montée sur une tête de type flexible. Cette tête fléchie légèrement au contact avec l'outil de calibration ou avec l'outil d'usinage. A l'inverse, La première bille d'étalonnage reste immobile au contact avec l'outil de calibration. Cela permet d'améliorer encore la précision de l'étalonnage, notamment la précision de la position relative de l'outil de calibration par rapport à l'outil d'usinage.

Dans certains modes de réalisation, le procédé comprend, entre l'étape de paramétrage et l'étape d'ébavurage, une étape de définition d'un premier point de référence sur une première arête à ébavurer par l'intermédiaire de l'outil de calibration, et sur la base des paramètres déterminés à l'étape de paramétrage, ledit premier point de référence étant le point de départ de la trajectoire prédéterminée lors de l'étape d'ébavurage.

La connaissance précise, par l'étape de paramétrage, de la position de la pièce aéronautique, en particulier d'une première arête à ébavurer, par rapport à l'outillage articulé, permet de définir précisément un point de référence sur ladite arête. La détermination précise de ce point de référence permet d'améliorer la précision de l'ébavurage réalisé par l'outil d'usinage lors de l'étape d'ébavurage.

Dans certains modes de réalisation, après l'ébavurage de la première arête à ébavurer, un deuxième point de référence est déterminé sur une deuxième arête à ébavurer par projection circonférentielle du premier point de référence en fonction des paramètres déterminés à l'étape de paramétrage, puis la deuxième arête à ébavurer est ébavurée à partir du deuxième point de référence et le long de la trajectoire prédéterminée.

La position et l'orientation de la pièce aéronautique étant connue par l'étape de paramétrage, et les arêtes à ébavurer étant réparties uniformément autour de la pièce aéronautique, la position du deuxième point de référence peut être déterminée simplement par projection circonférentielle du premier point de référence sur la deuxième arête à ébavurer.

Dans certains modes de réalisation, les étapes d'ébavurage et de projection des points de référence sont répétées sur au moins une partie de la circonférence de la pièce aéronautique.

Le procédé d'ébavurage de la pièce aéronautique peut ainsi être réalisé de manière automatique, en déterminant, au fur et à mesure, la position précise des points de référence, permettant un ébavurage précis des arêtes à ébavurer.

Dans certains modes de réalisation, l'outillage articulé est un robot à six axes de rotation, un seul axe parmi les six axes étant utilisé lors des étapes d'ébavurage, les autres axes étant sensiblement fixes.

Par robot six axes, on comprend un bras articulé comprenant six articulations. De plus, par « sensiblement fixes », on comprend que les autres axes ne sont pas strictement immobiles, mais effectuent seulement de légers mouvements d'ajustements, et sont donc considérés comme fixes par rapport à l'axe utilisé pour l'ébavurage. Le fait d'effectuer l'étape d'ébavurage en utilisant qu'un seul de ces six axes permet de limiter le risque d'erreurs cumulées liées au mouvement de l'ensemble des axes du robot.

**La** trajectoire prédéterminée de l'outil d'usinage n'est ainsi générée que par la rotation d'un seul axe du robot, permettant d'obtenir une trajectoire en arc de cercle. Cela permet de simplifier le processus d'ébavurage des arêtes, tout en limitant les erreurs de positionnement et surtout de trajectoire qui seraient engendrées par un travail nécessitant une grande amplitude de mouvement sur deux axes ou plus du robot. En d'autres termes, la conception de l'outillage permet de réaliser l'usinage des arêtes avec des amplitudes de mouvement très faibles du robot.

Dans certains modes de réalisation, ledit un seul axe est orienté parallèlement à l'axe central de la pièce aéronautique lors de l'étape d'ébavurage.

Le fait de réaliser l'ébavurage sur une course réduite des axes du robot, en alignant la rotation de l'outil d'usinage autour dudit seul axe du robot, avec l'axe de la pièce, permet de simplifier davantage le processus d'ébavurage des arêtes, et de limiter davantage les erreurs de trajectoire du robot.

Dans certains modes de réalisation, l'outil d'usinage est une fraise à bout hémisphérique, et l'outil de calibration est un palpeur.

La fraise à bout hémisphérique est particulièrement adaptée pour l'ébavurage d'une arête métallique.

Dans le présent exposé, la pièce aéronautique est un disque de turbomachine, par exemple un disque de turbine, et les arêtes à ébavurer sont les arêtes de fond des alvéoles du disque.

Par « arêtes de fond des alvéoles », on comprend la portion de l'alvéole dont les arêtes amont et aval chacune forment sensiblement un arc de cercle. Le disque de turbomachine peut être par exemple un disque de turbine, ou un disque de soufflante, mais pas uniquement.

Ce procédé permet ainsi de réaliser uniquement, dans un premier temps, l'ébavurage des arêtes de fond des alvéoles. En effet, dans certains modes de réalisation, le procédé peut comprendre, après l'étape d'ébavurage des arêtes de fond des alvéoles, l'ébavurage et/ou le rayonnage des arêtes des autres portions que comportent les alvéoles. Ces portions peuvent comprendre notamment le V des arêtes des alvéoles, des valeurs souhaitées de rayons des angles ébavurés, en particulier celui des arêtes du fond d'alvéole.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] la figure 1 représente une vue en perspective d'un disque de turbomachine,
[Fig. 2] La figure 2 représente une section transversale d'une alvéole du disque de la figure 1,
[Fig. 3] la figure 3 représente une arête de fond d'alvéole avant et après ébavurage, dans une section selon un plan perpendiculaire au plan de la figure 2,

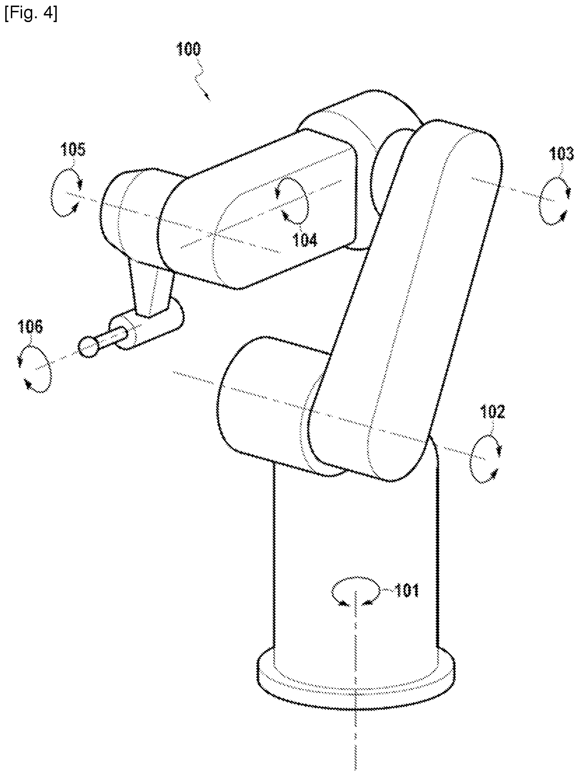

[Fig. 4] la figure 4 représente une vue en perspective d'un outillage articulé,
[Fig. 5A-5B] les figures 5A et 5B représentent des vues partielles en perspective d'une étape d'ébavurage du disque de la figure 1,
[Fig. 6] la figure 6 représente une vue d'ensemble en perspective du disque de la figure 1, de l'outillage articulé de la figure 4, et d'une bille d'étalonnage,
[Fig. 7] la figure 7 représente une vue latérale du disque de la figure 1, et sa position dans l'espace par rapport à l'outillage articulé,
[Fig. 8] la figure 8 représente schématiquement les étapes d'un procédé d'ébavurage selon le présent exposé,
[Fig. 9] la figure 9 représente schématiquement les étapes détaillés de l'étape d'étalonnage du procédé d'ébavurage de la figure 8,
[Fig. 10] la figure 10 représente schématiquement les étapes détaillés de l'étape de paramétrage du procédé d'ébavurage de la figure 8.

### Description des modes de réalisation

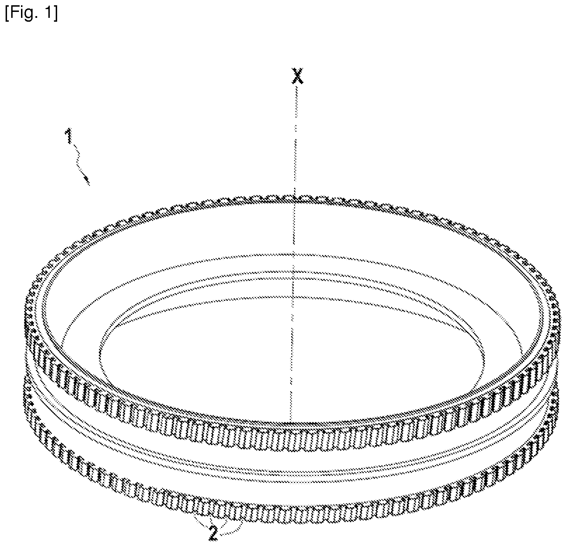

Dans le mode de réalisation décrit ci-dessous, la pièce aéronautique est un disque 1 de turbine aéronautique. La figure 1 illustre un tel disque de turbine comportant une pluralité d'alvéoles 2 réparties uniformément autour du disque. La figure 2 illustre la répartition des différentes zones d'une alvéole 2. Cette dernière présente successivement un V d'entrée 2a, un col 2b, un flan 2c, un lobe 2d et un fond 2e. Dans le mode de réalisation décrit ci-dessous, l'arête à ébavurer est l'arête du fond d'alvéole 2e. Plus précisément, le disque 1 comprend une pluralité d'alvéoles 2, en d'autres termes une pluralité d'arêtes à ébavurer, chaque alvéole comprenant un fond 2e dont l'extrémité amont et l'extrémité aval comprend une arête. La figure 3 illustre une telle arête dans une section transversale du fond 2e de l'alvéole, avant une opération de cassage d'angle, ou d'ébavurage (illustration de gauche sur la figure 3) et après une opération de cassage d'angle (illustration de droite sur la figure 3), à l'aide d'un outil coupant ou abrasif.

Le procédé selon le présent exposé décrit ci-dessous, utilise un robot articulé 100 à six axes 101, 102, 103, 104, 105 et 106. Le robot articulé peut être connecté à une unité de commande (non représentée), l'unité de commande commandant individuellement chacun des six axes du robot. Afin de s'affranchir du problème lié aux erreurs cumulées par l'ensemble des axes du robot, le travail d'ébavurage ne s'effectue que sur un axe, en particulier le sixième axe 106 disposé à une extrémité du robot 100. En effet, le fond d'alvéole 2e n'est formé que par une forme rayonnée. Ce rayon peut-être par exemple de 19 mm. De ce fait, une trajectoire simple dans un plan peut permettre l'usinage (ou ébavurage) de l'arête du fond d'alvéole 2e.

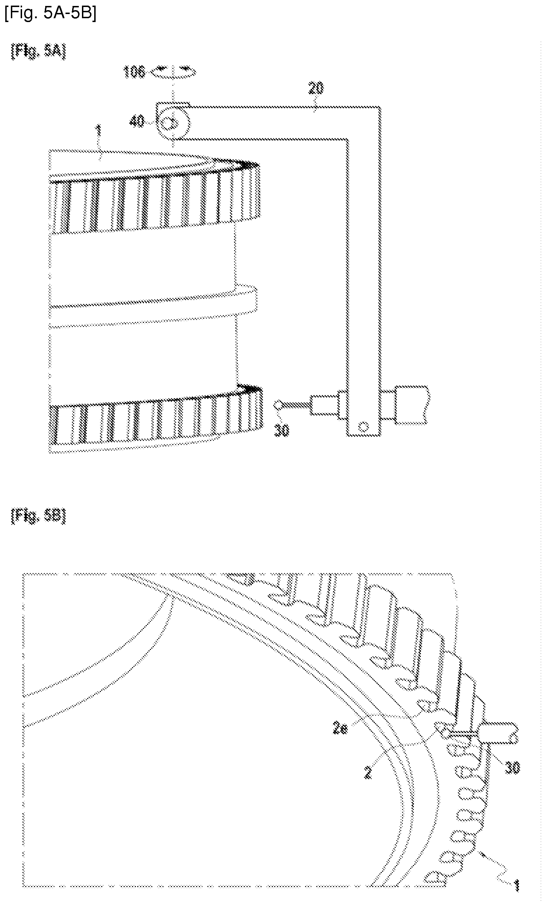

Les figures 5A et 5B représentent une opération d'ébavurage d'une arête du fond d'alvéole 2e par rotation d'un outil autour de l'axe 106.

Un porte outil 20 est solidaire de l'extrémité du robot 100, et mobile en rotation autour de l'axe 106. Un outil d'usinage 30 est fixé sur le porte outil 20 de manière immobile par rapport au porte outil 20. Dans cet exemple, l'outil d'usinage 30 est une fraise à bout hémisphérique, permettant d'obtenir un chanfrein en utilisant uniquement l'axe 106 du robot 100.

Un palpeur 40 est également fixé sur le porte outil 20 de manière immobile par rapport au porte outil 20. En d'autres termes, l'outil d'usinage 30 et le palpeur 40 sont immobiles l'un par rapport à l'autre, quels que soient les mouvements effectués par le robot 100. Par ailleurs, l'outil d'usinage 30 et le palpeur 40 sont disposés sur le porte outil 20 de manière à ce que le passage d'une opération de palpage par le palpeur 40, à une opération d'ébavurage par l'outil d'usinage 30, puisse s'effectuer par rotation du porte outil 20 à l'aide des mouvements des axes du robot 100.

L'outil d'usinage 30 et le palpeur 40 sont également connectés à l'unité de commande. Les données relevées par le palpeur 40 notamment lors des étapes d'étalonnage et de paramétrage décrites ci-dessous, sont transmises à l'unité de commande. L'unité de commande commande ainsi l'outil articulé 100 et l'outil d'usinage 30 en fonction des paramètres relevés par le palpeur 40.

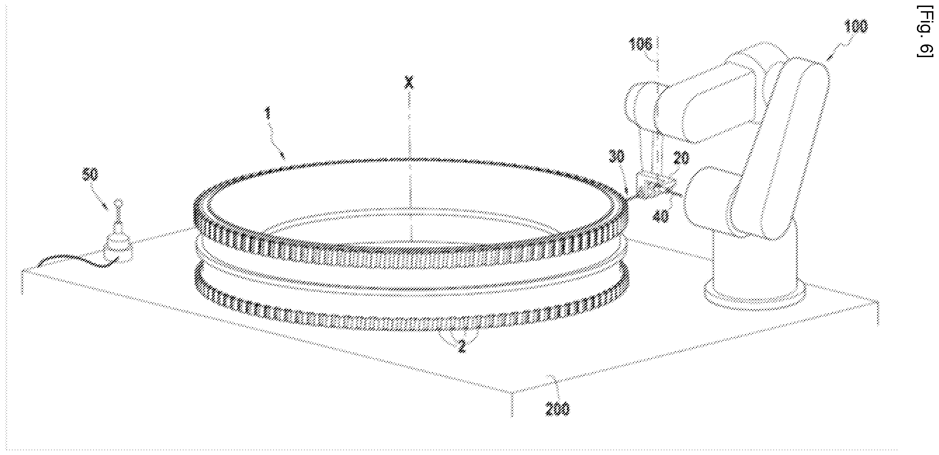

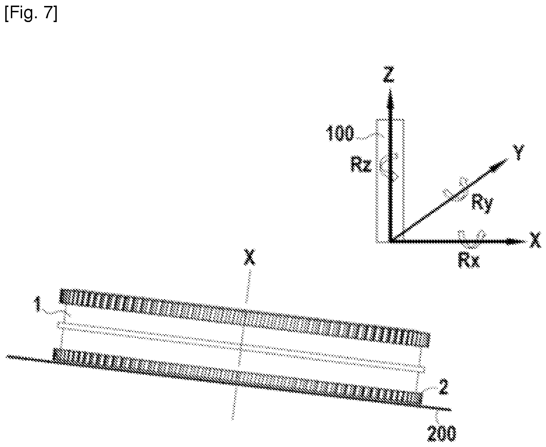

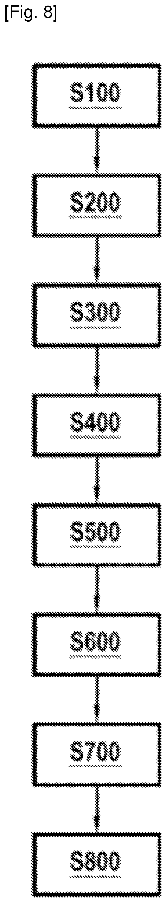

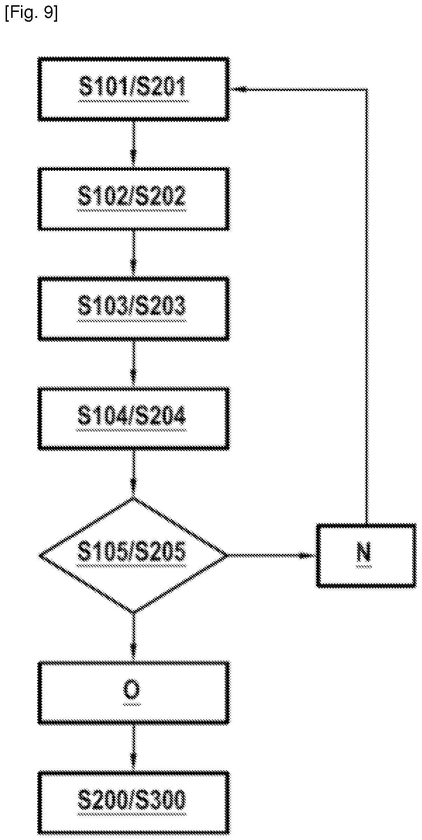

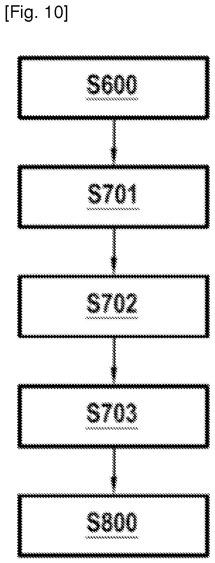

Un procédé d'ébavurage des arêtes de fond d'alvéole 2e va être décrit dans la suite de la description, en référence aux figures 6 à 10.

La première phase du procédé permet d'étalonner (ou calibrer) le palpeur 40 et l'outil d'usinage 30. En effet, Avant de réaliser l'ébavurage, il est nécessaire de connaître la position précise de la pièce dans l'espace. Il est donc nécessaire, au préalable, de calibrer précisément le palpeur 40 et l'outil d'usinage 30.

La première étape (étape S100) permet d'étalonner (ou calibrer) le palpeur 40. Pour ce faire, une bille d'étalonnage 50 fixe est utilisée. La bille d'étalonnage 50 est par exemple fixée au support 200 sur lequel le disque 1 est également fixé. La calibration du palpeur 40 sur la bille 50 peut être réalisée par différentes méthodes adaptées. Dans cet exemple, la calibration du palpeur 40 est réalisée suivant une méthode itérative comprenant l'acquisition de trois points sur un plan passant par le centre de la bille d'étalonnage 50, par exemple suivant des orientations de 0°, 90° et 180° par rapport à la bille 50 (étape S101) et un point sur un plan décalé du premier, idéalement normal au plan défini précédemment (étape S102). Le calcul permet de déterminer la position du centre de la bille d'étalonnage 50 (étape S103) et de déduire la jauge, c'est-à-dire les coordonnées x, y et z du centre de la sphère à l'extrémité du palpeur 40 par rapport au point d'attache du robot (étape S104). Une méthode itérative permet de converger et d'affiner le résultat. La procédure itérative prend fin lorsque l'écart de mesure obtenu pour chaque coordonnée entre deux itérations est inférieur à une valeur seuil prédéterminée, cette valeur seuil dépendant de l'application envisagée. Selon ce mode de réalisation, cette valeur seuil est de 0.05 mm. Les étapes S101 à S104 sont répétées tant que la valeur déterminée est supérieure ou égale à 0,05 mm (« N » à l'étape S105). Lorsque la valeur déterminée est inférieure à 0,05 mm (« O » à l'étape S105), le procédé passe à l'étape suivante.

Une étape complémentaire à l'étape S100 peut être réalisée (étape S200), et permet d'améliorer la précision de la calibration du palpeur 40. Cette étape complémentaire peut être réalisé ou non en fonction de l'application et de la précision attendue du système. Elle consiste à réaliser les mêmes opérations que celles mentionnées dans l'étape S100 avec une deuxième bille d'étalonnage (non représentée) dite mobile (étapes S201 à S205), ce qui permet d'affiner la calibration du palpeur 40 obtenue lors de l'étape S100 avec la bille d'étalonnage fixe 50.

L'étape S300 comprend des opérations similaires à celles réalisées aux étapes S100 et S200, appliquées à l'outil d'usinage 30. A la fin de cette étape, la jauge, c'est-à-dire la position du centre de la boule hémisphérique à l'extrémité de l'outil d'usinage 30 par rapport au point d'attache du robot, est connue. Il peut ainsi être déduit la position relative de l'outil d'usinage 30 par rapport au palpeur 40.

Les étapes suivantes visent à déterminer la position du disque 1 dans l'espace, par rapport au robot 100. Ces étapes permettent de réduire au maximum les défauts de localisation et d'augmenter la précision du positionnement. Pour ce faire, il est nécessaire de définir la position relative du disque 1 dans l'espace par rapport au référentiel du robot 100, plus précisément par rapport au référentiel du porte outil 20, selon les axes X, Y, Z, Rx, Ry et Rz.

Dans un premier temps, un plan sur une face supérieure du disque 1 est palpé par le palpeur 40, afin de définir le positionnement de la pièce selon les axes de références Z, Rx et Ry (étape S400). Le plan ainsi déterminé sert de premier plan de référence, ou plan principal, de la pièce.

Après un décalage du palpeur 40 parallèlement à ce premier plan de référence, trois points sont palpés sur la circonférence du disque 1, le palpeur 40 étant orienté de manière à s'étendre parallèlement au plan de référence (étape S500). Cette étape permet de définir l'axe central A du disque 1 et ainsi, le positionnement du disque 1 selon les axes de références Y et X. En d'autres termes, cette étape permet de déterminer la position du centre du disque 1 et le rayon de celui-ci, selon le référentiel du robot 100.

L'étape suivante (étape S600) de positionnement du disque 1 permet de définir la position angulaire du disque 1 selon l'axe Rz. Cette position angulaire est définie par rapport aux alvéoles 2. Le palpeur 40 vient palper la surface plane adjacente aux alvéoles 2, en d'autres termes la jante du disque 1, afin de définir si une alvéole 2 est présente ou non et d'itérer ce palpage jusqu'à palper un point au fond 2e d'une alvéole 2. Cette opération permet de définir de façon grossière le positionnement du disque 1 et des alvéoles 2 selon l'axe Rz.

Le positionnement précis des alvéoles 2 et, plus précisément, du fond d'alvéole 2e est déterminé lors de l'étape S700. La détermination précise de l'orientation du disque 1 est réalisée par l'acquisition d'un point sur une face supérieure ou une face inférieure de la jante à une extrémité de l'alvéole 2 (étape S701). Ce palpage permet de créer un plan au niveau de la jante parallèle au plan de référence défini à l'étape S400.

Le palpeur 40 effectue ensuite l'acquisition de deux points appartenant au plan défini à l'étape S701 et disposés sur les flancs actifs 2c de part et d'autre de l'axe de l'alvéole 2 (étape S702).

Ces deux points permettent de déduire le centre de l'alvéole 2. Ce point est alors mesuré par le palpeur 40 sur le fond de l'alvéole 2e (étape S703).

Ce nouveau point correspond au point de référence x0, y0, z0, à partir duquel l'outil d'usinage 30 réalise l'usinage, ou l'ébavurage, d'une arête du fond 2e de l'alvéole selon une trajectoire prédéterminée (étape S800). Cet ébavurage est ainsi réalisé à partir de ce point de référence, selon la trajectoire de référence prédéterminée, par rotation du porte outil 20 autour de l'axe 106 du robot 100.

Ladite trajectoire de référence prédéterminée réalise uniquement l'ébavurage d'une arête de fond d'une alvéole 2. Pour ébavurer les autres alvéoles 2, le point de référence de cette trajectoire est projeté circulairement suivant l'axe central A du disque 1 déterminé à l'étape S500 et sur la base des paramètres déterminés aux étapes S400 à S700.

De plus, l'étape S703 peut être réalisée sur trois alvéoles. Par exemple, si le disque comporte trente alvéoles, l'étape S703 est réalisée sur la première, la quinzième et la trentième alvéole. Ces trois points obtenus sont sur un cercle de centre A' et Rayon R', calculé sur la base de ces trois points. Ce centre et ce rayon sont sensiblement différents du centre A et du rayon R trouvés aux étapes S500 et S703, car ils tiennent compte des erreurs géométriques du robot. Dans ce cas la projection géométrique calculé par rapport à A' et R' intégrera les erreurs du robot.

Ce procédé permet de réaliser ces calculs et ces positionnements des points de référence non pas par rapport à des valeurs théoriques, mais par rapport aux valeurs relevées par le robot.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Procédé d'ébavurage d'un disque (1) de turbomachine comprenant une pluralité d'alvéoles (2) par l'intermédiaire d'un outillage articulé (100) comprenant une pluralité d'axes de rotation (101-106), le disque (1) de turbomachine comprenant au moins une arête à ébavurer, la au moins une arête à ébavurer étant une arête de fond (2e) d'une alvéole (2e) du disque (1), l'outillage articulé (100) comprenant un porte outil (20), le porte outil (20) portant un outil de calibration (40) et un outil d'usinage (30), l'outil de calibration (40) et l'outil d'usinage (30) étant fixés au porte outil (20) et étant immobiles l'un par rapport à l'autre, le procédé étant **caractérisé en ce qu'**il comprend des étapes de :
- étalonnage de l'outil de calibration (40) et de l'outil d'usinage (30) en utilisant un même moyen d'étalonnage, permettant de déterminer la position relative de l'outil de calibration (40) par rapport à l'outil d'usinage (30),
- paramétrage du disque (1) permettant de déterminer la position du disque (1) par rapport à l'outillage articulé (100), par l'intermédiaire de l'outil de calibration (40),
- ébavurage de la au moins une arête de fond (2e) d'alvéole à ébavurer par l'intermédiaire de l'outil d'usinage (30) se déplaçant le long d'une trajectoire prédéterminée, sur la base des paramètres obtenus à l'étape de paramétrage.

2. Procédé selon la revendication 1, dans lequel la au moins une arête à ébavurer comprend une pluralité d'arêtes à ébavurer uniformément réparties autour d'un axe central (A) du disque (1).

3. Procédé selon la revendication 1 ou 2, dans lequel la trajectoire prédéterminée est un arc de cercle.

4. Procédé selon l'une quelconque des revendications 1 à 3, dans lequel le moyen d'étalonnage comprend au moins une bille d'étalonnage (50), l'étape d'étalonnage étant réalisée par l'intermédiaire de contacts successifs entre l'au moins une bille d'étalonnage (50) et l'outil de calibration (40), et entre l'au moins une bille d'étalonnage (50) et l'outil d'usinage (30).

5. Procédé selon l'une quelconque des revendications 1 à 4, comprenant, entre l'étape de paramétrage et l'étape d'ébavurage, une étape de définition d'un premier point de référence sur une première arête à ébavurer de l'au moins une arête à ébavurer par l'intermédiaire de l'outil de calibration (40), et sur la base des paramètres déterminés à l'étape de paramétrage, ledit premier point de référence étant le point de départ de la trajectoire prédéterminée lors de l'étape d'ébavurage.

6. Procédé selon la revendication 5, dans lequel, après l'ébavurage de la première arête à ébavurer, un deuxième point de référence est déterminé sur une deuxième arête à ébavurer de l'au moins une arête à ébavurer par projection circonférentielle du premier point de référence en fonction des paramètres déterminés à l'étape de paramétrage, puis la deuxième arête à ébavurer est ébavurée à partir du deuxième point de référence et le long de la trajectoire prédéterminée.

7. Procédé selon la revendication 6, dans lequel les étapes d'ébavurage et de projection des points de référence sont répétées sur au moins une partie de la circonférence du disque (1).

8. Procédé selon l'une quelconque des revendications 1 à 7, dans lequel l'outillage articulé (100) est un robot à six axes de rotation (101-106), et dans lequel un seul axe (106) parmi les six axes de rotation est utilisé lors des étapes d'ébavurage, les autres axes étant sensiblement fixes.

9. Procédé selon la revendication 8, dans lequel ledit un seul axe (106) est orienté parallèlement à l'axe central (A) du disque (1) lors de l'étape d'ébavurage.

10. Procédé selon l'une quelconque des revendications 1 à 9, dans lequel l'outil d'usinage (30) est une fraise à bout hémisphérique, et l'outil de calibration (40) est un palpeur.

## Patentansprüche

1. Verfahren zum Entgraten einer Turbomaschinenscheibe (1), die eine Vielzahl von Vertiefungen (2) umfasst, mit einem gelenkigen Werkzeug (100), das eine Vielzahl von Drehachsen (101-106) umfasst, wobei die Turbomaschinenscheibe (1) mindestens eine zu entgratende Kante umfasst, wobei die mindestens eine zu entgratende Kante eine Bodenkante (2e) einer Vertiefung (2e) der Scheibe (1) ist, wobei das gelenkige Werkzeug (100) einen Werkzeughalter (20) umfasst, wobei der Werkzeughalter (20) ein Kalibrierungswerkzeug (40) und ein Bearbeitungswerkzeug (30) trägt, wobei das Kalibrierungswerkzeug (40) und das Bearbeitungswerkzeug (30) am Werkzeughalter (20) befestigt und relativ zueinander unbeweglich sind, wobei das Verfahren **dadurch gekennzeichnet ist, dass** es die folgenden Schritte umfasst:
- Kalibrieren des Kalibrierungswerkzeugs (40) und des Bearbeitungswerkzeugs (30) mit demselben Kalibrierungsmittel, wodurch die Bestimmung der relativen Position des Kalibrierungswerkzeugs (40) in Bezug auf das Bearbeitungswerkzeug (30) ermöglicht wird,
- Parametrieren der Scheibe (1), wodurch die Bestimmung der Position der Scheibe (1) in Bezug auf das gelenkige Werkzeug (100) ermöglicht wird, durch das Kalibrierungswerkzeug (40),
- Entgraten der mindestens einen zu entgratenden Bodenkante (2e) der Vertiefung durch das Bearbeitungswerkzeug (30), das sich auf der Basis der im Parametrierungsschritt erhaltenen Parameter entlang einer vorbestimmten Bahn bewegt.

2. Verfahren nach Anspruch 1, wobei die mindestens eine zu entgratende Kante eine Vielzahl von gleichmäßig um eine Mittelachse (A) der Scheibe (1) verteilten zu entgratenden Kanten aufweist.

3. Verfahren nach Anspruch 1 oder 2, wobei die vorbestimmte Bahn ein Kreisbogen ist.

4. Verfahren nach einem der Ansprüche 1 bis 3, wobei das Kalibrierungsmittel mindestens eine Kalibrierungskugel (50) umfasst, wobei der Kalibrierungsschritt durch aufeinanderfolgende Kontakte zwischen der mindestens einen Kalibrierungskugel (50) und dem Kalibrierungswerkzeug (40) und der mindestens einen Kalibrierungskugel (50) und dem Bearbeitungswerkzeug (30) durchgeführt wird.

5. Verfahren nach einem der Ansprüche 1 bis 4, umfassend, zwischen dem Parametrierungsschritt und dem Entgratungsschritt, einen Schritt des Definierens eines ersten Referenzpunktes auf einer ersten zu entgratenden Kante der mindesten einen zu entgratenden Kante durch das Kalibrierungswerkzeug (40) und auf der Basis der im Parametrierungsschritt bestimmten Parameter, wobei der erste Referenzpunkt der Startpunkt der im Entgratungsschritt vorbestimmten Bahn ist.

6. Verfahren nach Anspruch 5, wobei nach dem Entgraten der ersten zu entgratenden Kante ein zweiter Referenzpunkt auf einer zweiten zu entgratenden Kante der mindestens einen zu entgratenden Kante durch Umfangsprojektion vom ersten Referenzpunkt in Abhängigkeit von den im Parametrierungsschritt bestimmten Parametern bestimmt wird, dann die zweite zu entgratende Kante ab dem zweiten Referenzpunkt und entlang der vorbestimmten Bahn entgratet wird.

7. Verfahren nach Anspruch 6, wobei die Schritte des Entgratens und des Projizierens der Referenzpunkte auf mindestens einen Teil des Umfangs der Scheibe (1) wiederholt werden.

8. Verfahren nach einem der Ansprüche 1 bis 7, wobei das gelenkige Werkzeug (100) ein Roboter mit sechs Rotationsachsen (101-106) ist und wobei eine einzige Achse (106) der sechs Rotationsachsen bei den Entgratungsschritten verwendet wird, während die anderen Achsen im Wesentlichen fest sind.

9. Verfahren nach Anspruch 8, wobei die eine einzige Achse (106) während des Entgratungsschritts parallel zur Mittelachse (A) der Scheibe (1) ausgerichtet ist.

10. Verfahren nach einem der Ansprüche 1 bis 9, wobei das Bearbeitungswerkzeug (30) eine Fräse mit halbkugeligem Ende ist und das Kalibrierungswerkzeug (40) ein Fühler ist.

## Claims

1. A method for deburring disk (1) of a turbomachine comprising a plurality of slots (2) by means of an articulated tooling (100), comprising a plurality of axes of rotation (101-106), the turbomachine disk (1) comprising at least one edge to be deburred, the at least one edge to be deburred being a bottom edge (2e) of a slot (2) of the disk (1) the articulated tooling (100) comprising a tool holder (20), the tool holder (20) holding a calibration tool (40) and a machining tool (30), the calibration tool (40) and the machining tool (30) being attached to the tool holder (20) and being immovable relative to one another, the method being **characterized in that** it comprises steps of:
- calibrating the calibration tool (40) and the machining tool (30) by using a same calibration means, allowing determining the relative position of the calibration tool (40) relative to the machining tool (30),
- parameterizing the disk (1) allowing determining the position of the disk (1) relative to the articulated tooling (100), by means of the calibration tool (40),
- deburring the at least one bottom edge (2e) of the slot to be deburred by means of the machining tool (30) moving along a predetermined trajectory, on the basis of the parameters obtained during the parameterization step.

2. The method according to claim 1, wherein the at least one edge to be deburred comprises a plurality of edges to be deburred uniformly distributed around a central axis (A) of the disk (1).

3. The method according to claim 1 or 2, wherein the predetermined trajectory is a circular arc.

4. The method according to any one of claims 1 to 3, wherein the calibration means comprises at least one calibration ball (50), the calibration step being carried out by means of successive contacts between the at least one calibration ball (50) and the calibration and machining tool (40), and between the at least one calibration ball (50) and the machining tool (30).

5. The method according to any one of claims 1 to 4 comprising, between the parameterizing step and the deburring step, a step of defining a first reference point on a first edge to be deburred of the at least one edge to be deburred by means of the calibration tool (40), and on the basis of the parameters determined at the parameterization step, said first reference point being the starting point of the predetermined trajectory during the deburring step.

6. The method according to claim 5 wherein, after deburring the first edge to be deburred, a second reference point is determined on a second edge to be deburred of the at least one edge to be deburred by circumferential projection of the first reference point according to the parameters determined in the parameterization step, then the second edge to be deburred is deburred starting from the second reference point and along the predetermined trajectory.

7. The method of claim 6, wherein the deburring and projection steps of reference points are repeated over at least a portion of the circumference of the disk (1).

8. The method according to any one of claims 1 to 7, wherein the articulated tooling (100) is a robot with six axes of rotation (101-106), and in which a single axis (106) among the six axes is used during the deburring steps, the other axes being substantially fixed.

9. The method according to claim 8, wherein said single axis (106) is oriented parallel to the central axis (A) of the disk (1) during the deburring step.

10. The method according to any one of claims 1 to 9, wherein the machining tool (30) is a hemispherical tip milling tool, and the calibration tool (40) is a touch probe.
